(19) Europäisches Patentamt

European Patent Office

Office européen des brevets

(11) **EP 2 939 518 B1**

(12) # EUROPÄISCHE PATENTSCHRIFT

(45) Veröffentlichungstag und Bekanntmachung des Hinweises auf die Patenterteilung:
**14.03.2018  Patentblatt 2018/11**

(51) Int Cl.:
***A01D 41/14*** *(2006.01)*

(21) Anmeldenummer: **15160060.8**

(22) Anmeldetag: **20.03.2015**

(54) **DIE FAHRZEUGDYNAMIK BERÜCKSICHTIGENDES KONTROLLSYSTEM ZUR POSITIONSSTEUERUNG EINES GERÄTS FÜR EIN LANDWIRTSCHAFTLICHES ARBEITSFAHRZEUG**

CONTROL SYSTEM OBSERVING THE DYNAMICS OF A VEHICLE FOR CONTROLLING THE POSITION OF A DEVICE FOR AN AGRICULTURAL WORK VEHICLE

SYSTÈME DE VÉRIFICATION PRENANT EN COMPTE LA DYNAMIQUE DE VÉHICULE DESTINÉ AU RÉGLAGE DE POSITION D'UN APPAREIL POUR UN VÉHICULE DE TRAVAIL AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2014   DE 102014208070**

(43) Veröffentlichungstag der Anmeldung:
**04.11.2015   Patentblatt 2015/45**

(73) Patentinhaber: **Deere & Company**
**Moline, IL 61265 (US)**

(72) Erfinder: **Jung, Benedikt**
**67655 Kaiserslautern (DE)**

(74) Vertreter: **Holst, Sönke**
**John Deere GmbH & Co. KG**
**Mannheim Regional Center**
**Global Intellectual Property Services**
**John-Deere-Strasse 70**
**68163 Mannheim (DE)**

(56) Entgegenhaltungen:
**EP-A1- 1 269 823          EP-A1- 2 583 545**
**EP-A1- 2 910 097          WO-A2-2008/088916**
**DE-A1-102010 040 872**

## Beschreibung

Die Erfindung betrifft eine Anordnung zur Positionssteuerung eines an einem landwirtschaftlichen, durch Bodeneingriffsmittel in einer Vorwärtsrichtung über ein Feld bewegbaren Trägerfahrzeug angebrachten Geräts, mit:

einer Steuereinheit, die signalübertragend mit einem zur Positionsverstellung des Geräts gegenüber dem Trägerfahrzeug angeordneten Aktor verbunden ist, und

einer mit der Steuereinheit verbundenen Bodenprofilbestimmungseinrichtung, die eingerichtet ist, ein Bodenprofil vor dem Trägerfahrzeug zu ermitteln, wobei die Steuereinheit programmiert ist, eine aufgrund des Bodenprofils zu erwartende vertikale Bewegung des Trägerfahrzeugs zu ermitteln und darauf basierend dem Aktor in vorausschauender Weise ein Steuersignal zu übersenden, das derart bemessen ist, dass das Gerät kontinuierlich in einer vorbestimmbaren Position über dem Bodenprofil geführt wird.

### Stand der Technik

Bei vielen landwirtschaftlichen Anwendungen sind Gerätschaften in einer konstanten Position über dem Boden eines Feldes oder über dem darauf stehenden Pflanzenbestand zu führen. Beispiele sind Erntevorsätze vor Erntemaschinen, die in einer möglichst konstanten Schnitthöhe zu führen sind, um die Pflanzen in einer definierten Höhe über dem Boden abzuschneiden, oder Feldspritzen, die in möglichst konstanter Höhe über dem Blätterdach des Pflanzenbestands zu führen sind, um die Pflanzen aus einer definierten Höhe mit Spritzgut zu beaufschlagen. Auch bei höhenverstellbaren Überladeeinrichtungen, mit denen Erntegut von einer Erntemaschine auf ein Transportfahrzeug überladen wird, ist das Einhalten einer konstanten Position gegenüber dem Transportfahrzeug sinnvoll, auch wenn die Erntemaschine über Bodenunebenheiten fährt, um Erntegutverluste zu vermeiden.

Bei Erntemaschinen erfolgt die Positionsverstellung des Erntevorsatzes üblicherweise durch Aktoren, die ein Einzugsgehäuse der Erntemaschine mit dem an dessen Vorderseite befestigten Erntevorsatz um eine horizontale, quer zur Vorwärtsrichtung orientierte Achse verschwenken. Diese Schwenkachse fällt bei Mähdreschern in der Regel mit einer oberen Umlenkwalze des Einzugsförderers im Einzugsgehäuse zusammen und bei Feldhäckslern mit der Drehachse der Häckseltrommel.

Im einfachsten Fall wird die Höhe des Erntevorsatzes über dem Erdboden durch Sensoren in Form von Tastbügeln oder dgl. erfasst, die unterhalb des Erntevorsatzes angebracht sind. Ihre Ausgangssignale werden einer Steuereinrichtung zugeführt, die den Aktor zur Positionsverstellung des Erntevorsatzes im Sinne einer Einhaltung einer gewünschten Schnitthöhe verstellt (EP 0 331 893 A2), wobei ein weiterer Aktor den Erntevorsatz gegenüber der Erntemaschine um eine in Vorwärtsrichtung orientierte Achse verstellt, um den Erntevorsatz parallel zum Boden auszurichten.

Derartige Anordnungen unterliegen dem Nachteil, dass die Position des Erntevorsatzes auch von der vertikalen Position der Bodeneingriffsmittel (Räder oder Raupenlaufwerke) der Erntemaschine abhängt. Wenn die vorderen Räder über ein Hindernis (z.B. eine Bodenwelle) fahren, wird der Erntevorsatz zwangsläufig mit angehoben und wenn die hinteren Räder das Hindernis überfahren, wird der Erntevorsatz zwangsläufig abgesenkt. Die Kontrollanordnung zur Positionsverstellung des Erntevorsatzes kann allerdings nicht direkt auf die Bewegung der Erntemaschine reagieren, sondern erfährt davon nur anhand der Sensorwerte des Erntevorsatzes. Aufgrund der bestehenden Reaktionszeiten der Aktoren ist dann jedoch nicht in allen Fällen eine rechtzeitige Reaktion mehr möglich, was unter Umständen dazu führen kann, dass der Erntevorsatz in den Boden eindringt und Erde mit dem Erntegut aufgenommen wird oder sogar der Erntevorsatz beschädigt wird. Im Stand der Technik nach EP 0 331 893 A2 ist für derartige Fälle eine manuelle Übersteuerung durch den Bediener vorgesehen.

Weiterhin wurde vorgeschlagen, das Bodenprofil vor der Erntemaschine durch einen berührungslos mit Laserstrahlen arbeitenden Sensor vorausschauend zu erfassen (EP 1 269 823 A1 bzw. einen berührungslos oder mit Bodenkontakt arbeitenden Sensor zur Bodenprofilerfassung am Erntevorsatz anzubringen (EP 1 356 729 A1 und DE 10 2010 040 872 A1) und dessen Ausgangssignal zur hinreichend rechtzeitigen Ansteuerung des erwähnten Aktors zu verwenden, sodass die durch eventuelle Bodenunebenheiten bedingten vertikalen Bewegungen der Erntemaschine durch die Kontrollanordnung ausgeglichen werden. Eine derartige Anordnung kann auch auf einer abgespeicherten topographischen Karte des Feldes beruhen, die bei der Ernte ortsspezifisch abgerufen wird (WO 2008/088916 A2).

Die im vorhergehenden Absatz erwähnten vorausschauenden Kontrollanordnungen berücksichtigen bei der Ansteuerung des Aktors allerdings nicht, dass das System aus Boden, Reifen und Erntemaschine nicht in allen Fällen inkompressibel ist. Mit anderen Worten gehen die Kontrollanordnungen davon aus, dass sich die Bodenunebenheit beim Überfahren nicht verformen (d. h. inkompressibel sind), dass sich auch die Reifen nicht verformen und dass keine Federung zwischen den Bodeneingriffsmitteln und der Erntemaschine vorhanden sind, sodass keine vertikale Relativbewegung zwischen dem Bodenprofil und der Erntemaschine stattfinden kann. In der Realität sind diese Annahmen jedoch nicht zutreffend, denn die Form einer Bodenunebenheit wird sich, zumindest bei lockerem Sandboden, wenn ein Mähdrescher mit gefülltem Korntank, der mehr als 10 000 Liter aufnehmen kann, über sie hinwegfährt, ändern (zum Teil reversibel und zum Teil irreversibel). Auch sind die Reifen einer Erntemaschine nicht inkompressibel, sondern verformen sich beim Überfahren von Bodenverformungen. Weiterhin sind Erntemaschinen in manchen Fällen mit hydropneumatisch abgefederten Vorderrädern (DE 199 00 212 A1), hydropneumatisch abgefederten Raupenlaufwerken (WO 2006/018215 A1) oder gefederten Hinterrädern (DE 200 07 795 U1) versehen, die nicht als in sich starre Systeme angesehen werden können. Somit entstehen beim Überfahren von Bodenunebenheiten Bewegungen (insbesondere Schwingungen) in den Reifen und/oder Federungen, die sich über die Erntemaschine und das Einzugsgehäuse auch auf den Erntevorsatz übertragen und von konventionellen Kontrollanordnungen zur Erntevorsatzpositionssteuerung nicht berücksichtigt werden.

Die EP 2 583 545 A1 schlägt vor, die Verformung des Reifens durch einen Sensor zu erfassen. Diese Verformung dient zur Berechnung eines Kompensationssignals, anhand dessen berechnet wird, in welcher Höhe sich der Erntevorsatz befinden würde, wenn der Reifen nicht mehr verformt ist. Darauf basierend wird die Höhe des Erntevorsatzes durch den Aktor in der Weise eingestellt, dass die gewünschte Höhe über dem Boden erreicht wird. Hier wird somit nicht die beim Überfahren einer Bodenunebenheit entstehende Schwingung ausgeglichen, sondern die bisherige Nichtberücksichtigung der - durch die Verformung des Reifens variierenden - Position der Erntemaschine gegenüber dem Erdboden durch die allein anhand des Sensors zur Bestimmung der Schneidwerkshöhe über dem Boden erfolgende Messung der Schneidwerkshöhe. Eine Kompensation der Schwingung im Reifen beim Überfahren einer Bodenunebenheit ist mit dieser Anordnung nicht möglich.

Die erwähnten Probleme bestehen auch bei der Positionssteuerung von anderen, an einem landwirtschaftlichen Trägerfahrzeug angebrachten Geräten, wie den oben erwähnten Feldspritzen und Überladeeinrichtungen.

Die nachveröffentlichte EP 2 910 097 A1 beschreibt eine Höhensteuerung für den Erntevorsatz eines Mähdreschers. Das vor dem Mähdrescher liegende Bodenprofil wird ermittelt und ein erstes Steuersignal für den Aktor zur Höhenverstellung des Erntevorsatzes wird basierend auf dem Unterschied zwischen einem Sollwert und einem anhand der Auswirkung des Bodenprofils auf die Höhe des Erntevorsatzes über dem Boden ermittelten, erwarteten Istwert erzeugt. Um die aufgrund der Verstellung des Aktors entstehende Vertikalschwingung des Systems aus Mähdrescher und Erntevorsatz zu dämpfen, wird dem ersten Steuersignal noch ein phasenversetztes, zweites Steuersignal hinzugefügt, das im Ergebnis die entstehende Schwingung auslöscht. Das zweite Steuersignal (jedoch nicht das erste Steuersignal) kann den Füllstand des Korntanks, den Reifendruck und die Härte oder Festigkeit des Feldbodens berücksichtigen.

## Aufgabe

Die der Erfindung zu Grunde liegende Aufgabe wird darin gesehen, die im Stand der Technik beobachteten Nachteile zu vermeiden oder zumindest zu vermindern.

## Erfindung

Die vorliegende Erfindung wird durch die Patentansprüche definiert.

Eine Anordnung zur Positionssteuerung eines an einem landwirtschaftlichen, durch Bodeneingriffsmittel in einer Vorwärtsrichtung über ein Feld bewegbaren Trägerfahrzeug angebrachten Geräts umfasst eine Steuereinheit, die signalübertragend mit einem zur Positionsverstellung des Geräts gegenüber dem Trägerfahrzeug angeordneten Aktor verbunden ist, und eine mit der Steuereinheit verbundene Bodenprofilbestimmungseinrichtung, die eingerichtet ist, ein Bodenprofil vor dem Trägerfahrzeug zu ermitteln. Der Aktor kann insbesondere die Höhe des Geräts über dem Bodenprofil kontrollieren und/oder die Neigung des Geräts gegenüber einer sich in Vorwärtsrichtung erstreckenden, horizontalen Pendelachse. Die Steuereinheit ist programmiert, eine aufgrund des Bodenprofils zu erwartende vertikale Bewegung des Trägerfahrzeugs zu ermitteln und darauf basierend dem Aktor in vorausschauender Weise ein Steuersignal zu übersenden, das derart bemessen ist, dass das Gerät kontinuierlich in einer vorbestimmbaren Position über dem Bodenprofil geführt wird. Die Steuereinrichtung ist programmiert, beim Ermitteln der aufgrund des Bodenprofils zu erwartenden vertikalen Bewegung des Trägerfahrzeugs eine zu erwartende Verformung des Bodenprofils durch die Bodeneingriffsmittel und/oder eine zu erwartende, durch das Bodenprofil und/oder eine Geschwindigkeitsänderung des Trägerfahrzeugs in Reifen und/oder einer Federung des Trägerfahrzeugs induzierte vertikale Relativbewegung des Trägerfahrzeugs gegenüber dem Bodenprofil zu berücksichtigen.

Mit anderen Worten berechnet die Steuereinrichtung, wie sich das Bodenprofil verformen wird, wenn das Trägerfahrzeug über eine Bodenunebenheit fährt. Der Boden eines Feldes besteht in der Regel nicht aus extrem hartem Material (wie Granit oder Fels), sondern ist mehr oder weniger nachgiebig, abhängig u.a. von der Art des Bodens und dessen Feuchte. Auch hängt es von der Form des Bodenprofils ab, in welchem Maße sich eventuelle Bodenunebenheiten auf die vertikale Position des Trägerfahrzeugs auswirken. Kürzere Bodenwellen werden eher durch die Bodeneingriffsmittel des Trägerfahrzeugs niedergewalzt als längere Bodenwellen. Die Steuereinheit berechnet demnach vorausschauend, in welchem Maße sich die Form des Bodenprofils tatsächlich ändern wird und steuert den Aktor zur Positionsverstellung des Geräts entsprechend des Ergebnisses dieser Berechnung im Sinne einer kontinuierlichen Führung des Geräts in einer (insbesondere durch Bedienereingabe oder eine automatische Vorgabe) vorbestimmbaren Höhe über dem Boden an.

Alternativ oder zusätzlich berücksichtigt die Steuereinrichtung, in welcher Weise sich das Bodenprofil auf die Relativposition zwischen dem Bodenprofil und dem Trägerfahrzeug auswirken wird. Wie eingangs beschrieben, sind die Reifen nicht in sich vollständig starr, sondern geben bei Belastung flexibel nach. Das gilt auch für eine eventuell vorhandene Federung zwischen den Bodeneingriffsmitteln, bei denen es sich um gummibereifte Räder oder Gummiraupenlaufwerke handeln kann, und dem Trägerfahrzeug. Es entsteht demnach beim Überfahren einer Bodenunebenheit eine Relativbewegung des Trägerfahrzeugs gegenüber dem Bodenprofil. Diese wird durch die Steuereinrichtung vorausschauend evaluiert und bei der Ansteuerung des Aktors berücksichtigt, der, wie im vorhergehenden Absatz erwähnt, im Sinne einer kontinuierlichen Führung des Geräts in einer vorbestimmbaren Höhe über dem Boden kontrolliert wird. Auch eine Geschwindigkeitsänderung des Trägerfahrzeugs führt zu einer Nickbewegung, die durch die Steuereinrichtung vorausschauend berücksichtigt wird.

Auf diese Weise werden beim Überfahren von Bodenunebenheiten entstehende vertikale Bewegungen des Trägerfahrzeugs selbsttätig in einem verbesserten Maß kompensiert, was ein konstanteres Einhalten einer gewünschten Höhe des Geräts über dem Bodenprofil ermöglicht.

Bei der Relativbewegung zwischen dem Bodenprofil und dem Trägerfahrzeug kann es sich um ein einfaches, gedämpftes Nachgeben der Reifen oder Federung (d.h. ohne eine dadurch induzierte Schwingung), oder eine beim Überfahren einer Bodenunebenheit entstehende Schwingung handeln. Die Steuereinrichtung beaufschlagt im zweitgenannten Fall den Aktor mit einem zur Schwingung gegenphasigen, diese kompensierenden Steuersignal, das zur Auslöschung oder zumindest zur Dämpfung dieser Schwingung führt. Während das Trägerfahrzeug somit die vertikale Schwingung vollführt, wird das Gerät gegenüber dem Trägerfahrzeug in eine in umgekehrter Richtung und Amplitude verlaufende (Schwing-) Bewegung versetzt, die dazu führt, dass das Gerät gegenüber dem Bodenprofil in einer konstanten Position verbleibt.

Die Steuereinheit kann zur Bestimmung des Steuersignals ein Modell des Bodens verwenden. Anhand bekannter mechanischer Größen des Trägerfahrzeugs, der Bodeneingriffsmittel und des Bodens wird berechnet, wie sich das Bodenprofil und insbesondere eventuelle Bodenunebenheiten auf die Bewegung des Trägerfahrzeugs auswirken. Die erwähnten mechanischen Größen können werksseitig fest vorprogrammiert sein, oder insofern sie variabel sind, durch einen Bediener in die Steuereinrichtung eingegeben werden, oder durch geeignete Sensoren, die sich an Bord des Trägerfahrzeugs befinden oder ortsfest und mit einer Übertragungseinrichtung mit der Steuereinheit verbunden sind, erfasst bzw. aus dem tatsächlichen Verhalten des Trägerfahrzeugs beim Überfahren des Bodenprofils abgeleitet (d.h. gelernt) werden, wie weiter unten beschrieben.

Analog kann zur Ermittlung des Zusammenhangs zwischen dem Bodenprofil und der Relativposition zwischen dem Bodenprofil und dem Trägerfahrzeug durch die Steuereinheit ein Modell verwendet werden, welches das dynamische Verhalten des Trägerfahrzeugs beim Befahren von Bodenunebenheiten repräsentiert. Das Modell kann das Verhalten der Reifen und/oder einer Federung repräsentieren, die als Feder mit parallel geschaltetem Dämpfungselement angesehen werden können. In das Modell kann zudem ein sensorisch erfasster oder berechneter Beladungszustand des Trägerfahrzeugs insbesondere mit Erntegut eingehen.

Da es problematisch ist, a priori alle Parameter des Modells korrekt in die Steuereinheit einzugeben, wird vorgeschlagen, die Steuereinheit mit einem Istwertsensor zur Erfassung der Höhe des Geräts über dem Boden zu verbinden. Die Steuereinrichtung kann dann anhand der Signale des Istwertsensors das Modell selbstlernend an die jeweiligen Gegebenheiten anpassen.

Weiterhin kann die Steuereinheit mit einem Sensor zur Erfassung der vertikalen Bewegung und/oder Beschleunigung des Trägerfahrzeugs verbunden sein und das Signal des Sensors bei der Bestimmung des Steuersignals berücksichtigen. Die Werte dieses Sensors können insbesondere dazu dienen, die beim Überfahren des Bodenprofils tatsächlich erzielte vertikale Bewegung des Trägerfahrzeugs zu bestimmen, die wiederum Rückschlüsse auf die Veränderung des Bodenprofils beim Überfahren und/oder die im Trägerfahrzeug entstandenen Schwingungen bzw. Nickbewegung erlaubt.

Auch kann der Steuereinheit ein Geschwindigkeitssignal und/oder Geschwindigkeitsänderungssignal zugeführt werden. Die Steuereinheit kann das Geschwindigkeitssignal und/oder Geschwindigkeitsänderungssignal bei der Bestimmung des Steuersignals berücksichtigen. Das Geschwindigkeitssignal und/oder Geschwindigkeitsänderungssignal kann einerseits dazu dienen, den genauen Zeitpunkt festzustellen, wann das Trägerfahrzeug einen bestimmten Punkt des Bodenprofils erreicht und andererseits kann das Geschwindigkeitssignal und/oder Geschwindigkeitsänderungssignal dazu verwendet werden, die Auswirkung der Form des Bodenprofils auf die vertikale Position des Trägerfahrzeugs zu berechnen. So wird die Amplitude einer beim Überfahren einer Erhebung entstehenden Schwingung von der Geschwindigkeit abhängen. Außerdem kann ein Geschwindigkeitsänderungssignal dazu dienen, eine Nickbewegung des Trägerfahrzeugs zu berechnen, die wiederum bei der Ansteuerung des Aktors berücksichtigt wird.

Die Bodenprofilbestimmungseinrichtung kann in an sich bekannter Weise einen berührungslos oder mit dem Boden mechanisch wechselwirkenden Bodensensor (vgl. EP 1 269 823 A1, EP 1 356 729 A1 und DE 10 2010 040 872 A1) und/oder eine topographische Karte (s. WO 2008/088916 A2) umfassen.

Bei dem Trägerfahrzeug kann es sich insbesondere um eine Erntemaschine (z.B. Mähdrescher, Feldhäcksler, Baumwollpflücker, selbstfahrendes oder getragenes Mähgerat oder Zuckerrohrernter) handeln, deren Gerät ein Erntevorsatz oder eine Überladeeinrichtung für Erntegut ist. Das Trägerfahrzeug kann jedoch auch ein Traktor mit einem Gerät in Form einer daran angebauten Erntemaschine oder Feldspritze oder eine selbstfahrende Feldspritze sein. Das Spritzengestänge einer Feldspritze kann in einer gewünschten Höhe über dem Bodenprofil oder über einem Blätterdach des Pflanzenbestandes geführt werden.

Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Patentansprüche herangezogen werden dürfen. Es zeigt:

Fig. 1     eine halbschematische Seitenansicht eines landwirtschaftlichen Mähdreschers,

Fig. 2     den Mähdrescher beim Überfahren einer nachgiebigen Bodenunebenheit und die resultierende Höhe des Erntevorsatzes,

Fig. 2a    die bei der Situation nach Figur 2 entstehenden Bewegungen des Erntevorsatzes,

Fig. 3     ein Flussdiagramm, nach dem die Steuereinheit des Mähdreschers der Figur 2 arbeitet,

Fig. 4     den Mähdrescher beim Überfahren einer eine Schwingung in den Reifen des Mähdreschers verursachenden Bodenunebenheit und die resultierende Höhe des Erntevorsatzes,

Fig. 4a    die bei der Situation nach Figur 2 entstehenden Bewegungen des Erntevorsatzes,

Fig. 5     ein Flussdiagramm, nach dem die Steuereinheit des Mähdreschers der Figur 4 arbeitet.

Trägerfahrzeugs

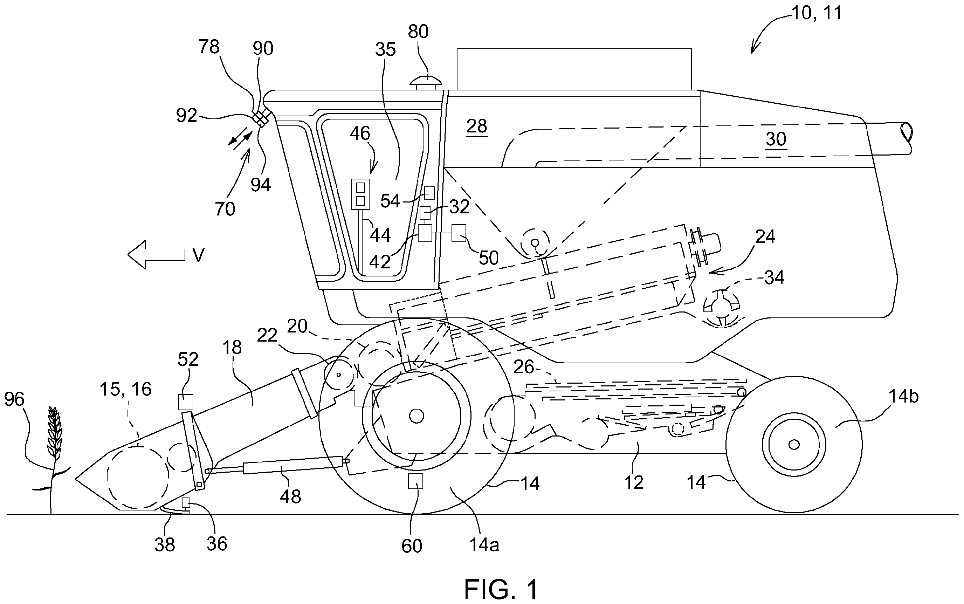

Die Figur 1 zeigt einen als Beispiel für ein Trägerfahrzeug 11 dienenden, landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Raupenlaufwerken versehen sein. Ein Gerät 15, das hier beispielhaft in Form eines Schneidwerks 16 ausgeführt ist, wird zum Ernten von Erntegut verwendet und führt es einem Schrägförderer 18 zu. Der Schrägförderer 18 enthält eine Fördereinrichtung, um das geerntete Gut einer Leittrommel 20 zuzuführen. Die Leittrommel 20 führt das Gut einer drehbaren, zum Dreschen und Trennen eingerichteten Gutbearbeitungseinrichtung 24 zu. Die dargestellte Gutbearbeitungseinrichtung 24 ist im Mähdrescher axial angeordnet. Während die Gutbearbeitungseinrichtung 24 hier mit einem Axialdresch- und Trennrotor ausgeführt ist, könnte dafür auch eine konventionelle, quer angeordneten Dreschtrommel, die mit einem Dreschkorb zusammenwirkt, verwendet werden, der als Trenneinrichtung ein Strohschüttler oder wenigstens ein tangentialer oder axialer Trennrotor folgt.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Höhe des Erntevorsatzes 16 gegenüber der tragenden Struktur 12 des Mähdreschers 10 wird durch einen Aktor 48 in Form eines Hydraulikzylinders kontrolliert, der zwischen der Vorderseite der tragenden Struktur 12 und dem Schrägförderer 18 angeordnet ist, welcher seinerseits um die Drehachse der oberen Schrägfördererwalze 22 schwenkbar an der tragenden Struktur 12 angelenkt ist. Durch den Aktor 48 wird der Schrägförderer 18 gemeinsam mit dem Erntevorsatz 16 verschwenkt und dessen Höhe über dem Boden des Feldes beim Abernten eines dort stehenden Pflanzenbestandes 96 kontrolliert. Ein (optionaler) weiterer Aktor 52 kann den Erntevorsatz 16 gegenüber dem Schrägförderer 18 um eine horizontale, sich in Vorwärtsrichtung V erstreckende Pendelachse verschwenken.

Positionssteuerung des Geräts

Die Ansteuerung des Aktors 48 erfolgt durch eine Steuereinheit 42, die durch eine elektrohydraulische Ventileinheit 32 mit dem Aktor 48 gekoppelt ist. Der Sollwert für die Höhe des Erntevorsatzes 16 über dem Boden kann durch eine Bedienerschnittstelle 46 eingegeben werden, die insbesondere an einem Fahrhebel 44 angeordnet sein kann, welcher zur manuellen Vorgabe der Vortriebsgeschwindigkeit des Mähdreschers 10 dient.

Die tatsächliche, jeweilige Höhe des Erntevorsatzes 16 über dem Boden wird mittels eines signalübertragend mit der Steuereinheit 42 verbundenen Istwertsensors 36 erfasst, der mit einem um eine horizontale, quer zur Vorwärtsrichtung V verlaufende Achse schwenkbaren, auf dem Boden schleifenden Tastbügel 38 zusammenwirkt. Insbesondere sind mehrere Istwertsensoren 36 über die Breite des Erntevorsatzes 16 verteilt, die alle separat mit der Steuereinheit 42 verbunden sind.

Zur Ermittlung des Bodenprofils vor dem Mähdrescher 16, d.h. der vertikalen Position der Oberfläche des Feldes abhängig von der seitlichen Position und der Position in Vorwärtsrichtung (entspricht der dreidimensionalen Topologie des Feldes vor dem Mähdrescher 16) ist die Steuereinrichtung 42 mit einem Speicher 50 verbunden, in dem diese Topologie vorab abgespeichert ist. Sie kann bei einer vorherigen Messfahrt oder einem vorherigen Erntevorgang ermittelt worden sein. Die aktuelle Position des Mähdreschers 16 wird mittels eines Positionsbestimmungssystems 80 ermittelt, das beispielsweise Signale von Positionssignale abstrahlenden Satelliten (GPS, Galileo oder Glonass) und ggf. lokale Korrektursignale empfängt. Anhand der Karte aus dem Speicher 50 und der vom Positionsbestimmungssystem 80 ermittelten Position evaluiert die Steuereinheit 42 somit, welche Form das dreidimensionale Bodenprofil vor dem Mähdrescher 10 hat.

Alternativ oder zusätzlich kann das Bodenprofil auch mittels eines berührungslos arbeitenden Bodensensors 70 erfasst werden, der einen Sender 92 für den Pflanzenbestand 96 durchdringende, jedoch vom Boden reflektierte elektromagnetische Wellen (insbesondere Radar) und einen die Laufzeit der Wellen erfassenden Empfänger 94 sowie eine Auswertungseinheit 90 umfasst. Der Bodensensor 70 insgesamt (oder nur der Sender 92 und der Empfänger 94) werden durch einen Verstellantrieb um eine Achse 78 kontinuierlich verschwenkt, um zumindest die Schnittbreite des Erntevorsatzes 16 vor dem Mähdrescher 10 abzutasten, oder es wird ein starrer, d.h. nicht verschwenkender Bodensensor 70 mit einem zur Erfassung der Breite des Schneidwerks 16 oder zumindest der Räder 14 hinreichenden Blickfeld verwendet. Die Entfernungssignale des Empfängers 94 werden durch die Auswertungseinheit 90 in das dreidimensionale Bodenprofil umgerechnet und der Steuereinheit 42 zugeführt.

Das Bodenprofil kann auch durch die über die Breite des Erntevorsatzes 16 verteilten Istwertsensoren 36 ermittelt werden, wobei die Position des Mähdreschers 10 durch einen den Drehwinkel der vorderen Räder 14 erfassenden, mit der Steuereinrichtung 42 gekoppelten Radsensor 60 und/oder das Positionsbestimmungssystem 80 erfasst und in die Position der Istwertsensoren 36 umgerechnet werden kann. Hierbei kann auch das Signal eines insbesondere als Trägheitssensor ausgeführten Sensors 54 zur Erfassung der vertikalen Bewegung und/oder Beschleunigung des Mähdreschers 10 berücksichtigt werden, um durch eine gerade stattfindende vertikale Bewegung des Mähdreschers 10 entstehende Verfälschungen zu berücksichtigen. Die Topologie in dem zukünftig von den Rädern 14 überfahrenen Bereich des Bodens kann somit in Echtzeit mit dem Tastbügel 38 (oder einem anderen, mit dem Erdboden zusammenwirkenden Sensor, vgl. DE 10 2010 040 872 A1) gemessen und solange gespeichert werden, bis Vorder- und Hinterräder 14a, 14b darüber gefahren sind - also in Echtzeit. Das wahre Bodenprofil vor der Deformation ergibt sich durch Kompensation der Lage des Mähdreschers 10 mittels des Sensors 54. Ein Positionsbestimmungssystem 80 ist in diesem Fall nicht von Nöten.

Die Steuereinrichtung 42 ist programmiert, den Aktor 48 über die Ventileinheit 32 derart anzusteuern, dass der Erntevorsatz 16 in einer durch die Bedienerschnittstelle 46 vorgebbaren Höhe über dem Boden geführt wird. Wenn der Boden in seitlicher Richtung (quer zur Zeichenebene der Figur 1) nicht ganz eben ist, wird die Höhe und ggf. seitliche Neigung (durch den weiteren Aktor 52) derart gewählt, dass über die gesamte Breite die vorgegebene Höhe nicht unterschritten, aber auch nicht mehr als nötig überschritten wird.

Die Ansteuerung des Aktors 48 und ggf. 52 erfolgt in vorausschauender Weise abhängig vom Bodenprofil vor dem Mähdrescher 10. Nähert sich der Erntevorsatz 16 demnach einer Erhebung im Bodenprofil, wird der Erntevorsatz 16 in einer die Reaktionszeiten und erreichbaren Verstellgeschwindigkeiten der Ventileinheit 32 und des Aktors 48 und ggf. 52 berücksichtigenden Weise rechtzeitig angehoben. Dabei wird auch berücksichtigt, dass das Bodenprofil die vertikale Position der Bodeneingriffsmittel (hier: Räder 14) beeinflusst, welche sich wiederum auf die Position des Erntevorsatzes 16 auswirkt. Bevor die vorderen Räder 14 eine Senke durchfahren, wird der Erntevorsatz 16 demnach ebenfalls vorausschauend angehoben. Hierzu sei auf den Stand der Technik nach EP 1 269 823 A1, EP 1 356 729 A1, DE 10 2010 040 872 A1 und WO 2008/088916 A2 verwiesen, der durch Verweis mit in die vorliegenden Unterlagen aufgenommen wird.

## Berücksichtigung der Änderung des Bodenprofils beim Überfahren

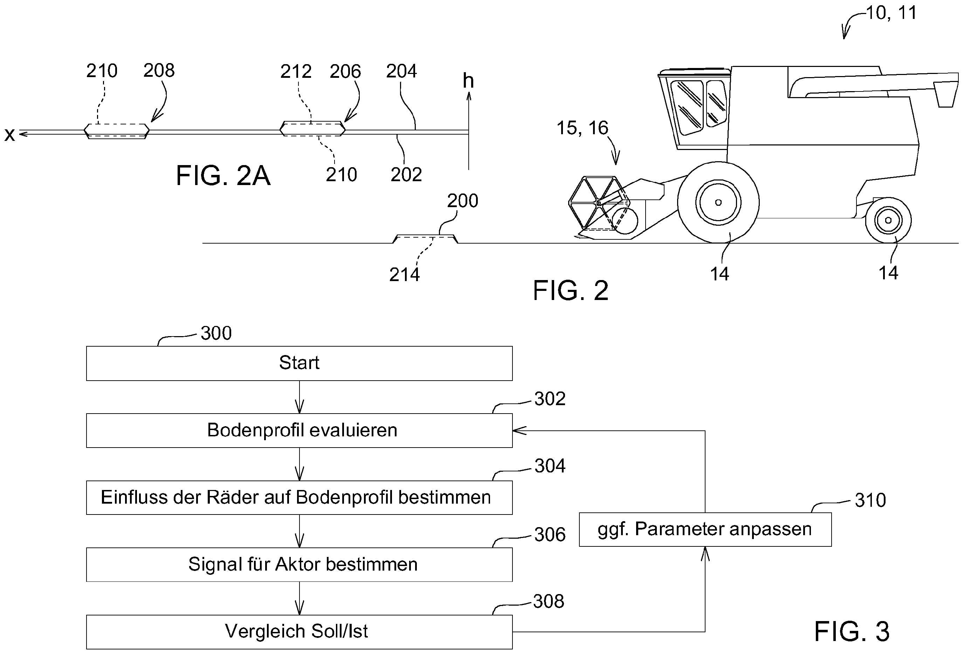

Es wird nun auf die Figur 2 verwiesen, in welcher der Mähdrescher 10 der Figur 1 beim Erntevorgang auf einem Feld dargestellt ist. Das Bodenprofil des Feldes hat eine Erhebung 200, die sich über die von den Rädern 14 überfahrende Breite erstreckt. Der Mähdrescher würde den Erntevorsatz 16 rechtzeitig anheben, bevor dieser die Erhebung 200 erreicht und wieder absenken, wenn er diese Erhebung 200 passiert hat. Die Figur 2a zeigt den sich zeitlich daran anschließenden Verlauf der Höhe des Erntevorsatzes 16: die Linie 200 stellt eine Höhe von 0 dar, und die durchgezogene Linie 204 die Höhe des Erntevorsatzes 16 über dem Boden, wenn die Steuereinheit 42 den Verlauf des Bodenprofils überhaupt nicht berücksichtigen würde. Dann würde der Erntevorsatz 16 an der Stelle 206 aus seiner vorherigen, vorgegebenen Höhe angehoben, da die vorderen Räder 14 genau dort die Erhebung 200 erreichen und, sobald die vorderen Räder 14 nach Überfahren der Erhebung 200 wieder das niedrigere, allgemeine Bodenniveau erreicht haben, wieder in die vorherige Höhe absinken. Analog würde der Erntevorsatz 16 an der Stelle 208 aus seiner vorherigen, vorgegebenen Höhe abgesenkt, da die hinteren Räder 14 genau dort die Erhebung 200 erreichen und, sobald die hinteren Räder 14 nach Überfahren der Erhebung 200 wieder das niedrigere, allgemeine Bodenniveau erreicht haben, wieder in die vorherige Höhe absinken. An der Stelle 208 würde der Erntevorsatz 16 in das Erdreich eindringen und Erdmaterial im Erntegut mitführen und könnte auch beschädigt werden.

Die Figur 2a zeigt außerdem eine gestrichelte Kurve 210, die eine an sich bekannte (vgl. den im vorletzten Abschnitt erwähnten Stand der Technik) Steuereinrichtung 42 verwenden würde. An der Stelle 206 würde der Erntevorsatz 16 abgesenkt, damit er (trotz des Anhebens durch die vorderen Räder 14 beim Überfahren der Erhebung 200) weiter in seiner gewünschten Höhe verbleibt, und an der Stelle 208 würde er angehoben, damit er (trotz des Absenkens durch die hinteren Räder 14 beim Überfahren der Erhebung 200) nicht in das Erdreich eindringt, sondern in der gewünschten Höhe über dem Boden verbleibt. Diese Kurve 210 geht jedoch davon aus, dass der Erdboden im Bereich der Erhebung 200 in sich vollständig starr, d.h. in keinem Maße nachgiebig ist, und sich weder plastisch noch elastisch verformt, wenn die Räder 14 des Mähdreschers 10 über ihn fahren.

Diese Annahme trifft in der Praxis jedoch nicht in allen Fällen zu. Die Steuereinrichtung 42 verwendet bei der vorliegenden Ausführungsform daher eine punktiert eingezeichnete Kurve 212, die davon ausgeht, dass die Erhebung 200 (in einem stärkeren Maß als der übrige Boden) elastisch und/oder plastisch nachgibt, wenn sie durch die Räder 14 überfahren wird, wie durch die Kurve 214 in der Figur 2 gezeigt ist. Der Erntevorsatz 14 wird demnach gemäß der Kurve 212 in Figur 2a zwar angehoben und abgesenkt, aber in einem geringeren Maße als nach der Kurve 210, um dieser Tatsache Rechnung zu tragen.

Die Steuereinrichtung 42 geht dabei nach dem Flussdiagramm der Figur 3 vor. Nach dem Start im Schritt 300 wird im Schritt 302 zunächst das dreidimensionale Bodenprofil vor dem Mähdrescher 10 evaluiert, in der oben beschriebenen Weise. Im Schritt 304 wird dann bestimmt, welchen Einfluss die Räder 14 auf das Bodenprofil haben, d.h. in welchem Maße die Räder 14 eine Erhebung 200 beim Überfahren niederwalzen. In diesem Schritt 304 wird u.a. der sensorisch bestimmte und/oder mittels einer Ertragskarte bestimmte, erwartete Füllstand des Korntanks 28 und die Dichte des Ernteguts darin berücksichtigt, da die Masse des Ernteguts im Korntank 28 einen großen Einfluss auf die Beeinflussung des Bodenprofils durch die Räder 14 haben. Auch andere Bodengrößen, wie Bodenfeuchte und Bodenart bzw. eine daraus abgeleitete Verdichtbarkeit und Reifengrößen, wie Druck in den Reifen 14a, 14b (der durch geeignete Drucksensoren erfasst werden kann), Abmessungen etc. werden im Schritt 304 berücksichtigt. Außerdem wird die (mittels der Positionsbestimmungseinrichtung 80 oder eines anderen Geschwindigkeitssensors bestimmte) aktuelle Geschwindigkeit des Mähdreschers 10 berücksichtigt, da auch diese einen Einfluss auf die Beeinflussung des Bodenprofils durch die Räder 14 hat. Es wird demnach im Schritt 304 ein modifiziertes Bodenprofil berechnet, das der Kurve 214 der Figur 2 entspricht und die Verformung durch die Räder 14 (bzw. Gummiraupenlaufwerke) berücksichtigt.

Es folgt der Schritt 306, in dem (ebenfalls unter Berücksichtigung der aktuellen Geschwindigkeit des Mähdreschers 10, um sicherzustellen, dass das Ansteuersignal zur Position des Mähdreschers passt) ein Ansteuersignal für den Aktor 48 und/oder 52 berechnet wird, das auf dem modifizierten Bodenprofil des Schritts 304 beruht. Die Aktoren 48 und/oder 52 werden im Folgenden entsprechend des Ergebnisses des Schritts 306 angesteuert. Beim Überfahren des Bodenprofils wird dann im Schritt 308 der Istwert der Höhe des Erntevorsatzes 16 über dem Boden anhand der Istwertsensoren 36 mit dem gewünschten Verlauf der Höhe des Erntevorsatzes (d.h. dem vom Bediener über die Bedienerschnittstelle 46 eingegebenen Höhe) verglichen. Im Schritt 308 kann alternativ oder zusätzlich das Signal eines insbesondere als Trägheitssensor ausgeführten Sensors 54 zur Erfassung der vertikalen Bewegung und/oder Beschleunigung des Mähdreschers 10 verwendet werden, um zu bestimmen, in welchem Maß der Mähdrescher 10 tatsächlich beim Überfahren der Erhebung 200 angehoben wird.

Im folgenden Schritt 310 werden dann, wenn der Istwert vom Sollwert abgewichen hat, im Schritt 304 verwendete Parameter im Sinne eines zukünftigen Erreichens des Sollwerts modifiziert. Wenn beispielsweise im Schritt 308 festgestellt wird, dass die Räder 14 weiter in den Boden eindringen als berechnet, wird im nächsten Schritt 304 eine geringere Festigkeit des Bodens zu Grunde gelegt. Die Steuereinrichtung 42 kann für die Schritte 304 und 310 für ein Feld jeweils konstante Parameter verwenden oder eine Karte verwenden, in der für unterschiedliche Bereiche des Feldes unterschiedliche Parameter genutzt werden. Diese Karte kann beispielsweise auf einer vorhandenen Bodenart- und/oder Bodenfeuchtekarte basieren.

Berücksichtigung der entstehenden Schwingungen in den Reifen

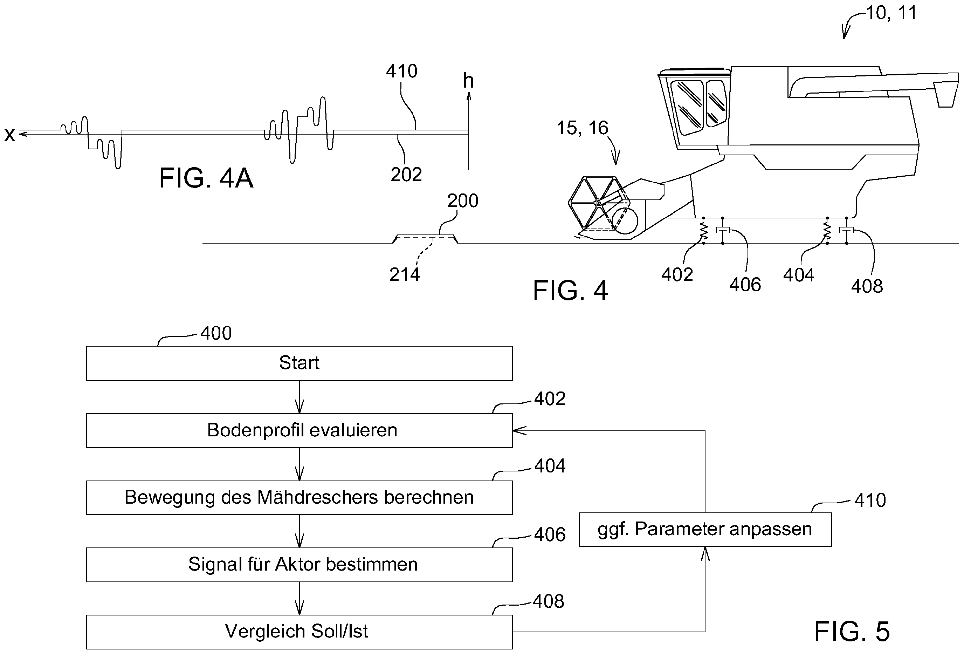

Die Figur 4 zeigt den Mähdrescher 10 wieder auf einem Feld vor dem Überfahren einer Erhebung 200. Zur Verdeutlichung, dass die Reifen 14a, 14b der Räder 14 in der Praxis nicht in sich starr, sondern gedämpft federnd sind, sind die Räder 14 hier durch Federn 402, 404 und Dämpfungselemente 406, 408 ersetzt worden. Die Federung der Reifen 14a, 14b des Mähdreschers 10 führt dazu, dass die tragende Struktur 12 (d.h. der eigentliche Mähdrescher 10 ohne Räder 14) in eine vertikale Schwingung gerät, wenn der Mähdrescher 10 die Erhebung 200 überfährt. Dieses Phänomen lässt sich bei jedem gefederten Fahrzeug beobachten, das über eine derartige Erhebung fährt (z.B. an Autos beim Überfahren von Bodenwellen). Diese vertikale Relativbewegung zwischen dem Bodenprofil und dem Mähdrescher 10 lassen bisherige Höhensteuerungen von Erntevorsätzen 16 unberücksichtigt. Hinzu kommt, dass neben den Reifen 14a, 14b weitere Federungen für die vorderen und/oder rückwärtigen Räder 14 des Mähdreschers 10 vorhanden sein können.

Die Steuereinrichtung 42 geht zwecks Vermeidung der durch diese Schwingungen entstehenden Ungenauigkeiten in der Höhenführung des Erntevorsatzes nach dem Flussdiagramm der Figur 5 vor. Nach dem Start im Schritt 400 wird im Schritt 402 das Bodenprofil evaluiert. Dabei kann es sich um das unkorrigierte Bodenprofil des Schritts 302 der Figur 3 oder das modifizierte Bodenprofil des Schritts 304 der Figur 3 (vgl. Kurve 214 in Figur 4) handeln. Im folgenden Schritt 404 wird dann die Bewegung des Mähdreschers 10 in Folge der dreidimensionalen Form des Bodenprofils berechnet. Dabei kann ein Modell für den Mähdrescher 10 entsprechend der Figur 4 verwendet werden, d.h. mit Federkonstanten für die vorderen und rückwärtigen Räder 14 und zugehörige Dämpfungskonstanten. In dieses Modell geht ebenfalls der Füllungsgrad des Korntanks 28 bzw. die darin enthaltene Masse des Ernteguts mit ein, wie oben anhand der Figur 3 beschrieben, sowie der Druck in den Reifen 14a, 14b, der durch geeignete Drucksensoren erfasst werden kann. Im Schritt 404 geht auch das eigentliche Bodenprofil mit ein, um die nur auf dem Bodenprofil basierende Bewegung des Mähdreschers 10 zu berücksichtigen. Außerdem wird die (mittels der Positionsbestimmungseinrichtung 80 oder eines anderen Geschwindigkeitssensors bestimmte) aktuelle Geschwindigkeit des Mähdreschers 10 berücksichtigt, da die Amplitude der entstehenden Schwingung auch von der Geschwindigkeit abhängt, mit welcher der Mähdrescher 10 über die Erhebung 200 fährt. Das Ergebnis des Schritts 404 ist die Höhe des Erntevorsatzes 16 über dem Boden als Funktion der Wegstrecke x in Vorwärtsrichtung V, die ohne Gegenreaktion darauf durch die Aktoren 48 und ggf. 52 zu erwarten wäre.

Im folgenden Schritt 406 wird dann (ebenfalls unter Berücksichtigung der aktuellen Geschwindigkeit des Mähdreschers 10, um sicherzustellen, dass das Ansteuersignal zur Position des Mähdreschers passt) ein Ansteuersignal für den Aktor 48 und/oder 52 berechnet, das auf Ergebnis des Schritts 404 beruht und derart gestaltet ist, dass man im Ergebnis wieder die gewünschte, mit der Bedienerschnittstelle 46 eingegebene Position des Erntevorsatzes 16 möglichst gut einhält. Wenn die Reifen 14a, 14b der Räder 14 und somit der Mähdrescher 10 an einer Erhebung in eine Schwingung versetzt werden, werden die Aktoren 48 und ggf. 52 gegenphasig und mit geeigneter Amplitude angesteuert, um die Schwingung auszugleichen. Dies kann proaktiv (z.B. durch Shaping, vgl. DE 10 2014 203 005 A1) oder reaktiv (sensorgestützt) realisiert werden. Hierzu sei auf die Kurve 410 der Figur 4 verwiesen, die sich mit einer in den Reifen 14a, 14b beim Überfahren der Erhebung 200 entstehenden Schwingung auslöscht und zu einer konstanten Höhe des Erntevorsatzes 16 führt, auch wenn der Mähdrescher 10 die Erhebung 200 überfährt. Die Aktoren 48 und/oder 52 werden im Folgenden entsprechend des Ergebnisses des Schritts 406 angesteuert.

Beim Überfahren des Bodenprofils wird anschließend im Schritt 408 der Istwert der Höhe des Erntevorsatzes 16 über dem Boden anhand der Istwertsensoren 36 mit dem gewünschten Verlauf der Höhe des Erntevorsatzes (d.h. dem vom Bediener über die Bedienerschnittstelle 46 eingegebenen Höhe) verglichen. Im Schritt 408 kann alternativ oder zusätzlich das Signal eines insbesondere als Trägheitssensor ausgeführten Sensors 54 zur Erfassung der vertikalen Bewegung und/oder Beschleunigung des Mähdreschers 10 verwendet werden, um zu bestimmen, in welchem Maß der Mähdrescher 10 tatsächlich beim Überfahren der Erhebung 200 in eine Schwingung versetzt wird. Im folgenden Schritt 410 werden dann, wenn der Istwert vom Sollwert abgewichen hat, im Schritt 404 verwendete Parameter im Sinne eines zukünftigen Erreichens des Sollwerts modifiziert. Wenn beispielsweise die Frequenz bzw. Dämpfung der tatsächlichen Schwingung von der erwarteten Schwingung abweicht, wird die im Schritt 404 verwendete Eigenfrequenz bzw. Dämpfung des Systems aus Feder 402 oder 404 und Dämpfungsglied 406 oder 408 entsprechend modifiziert.

Bei dem in der Figur 4 gezeigten Modell des Mähdreschers 10 könnte eine Schätzung des Deformationsgrades der Reifen 14a, 14b am Beispiel eines Verzögerungsgliedes 2. Ordnung folgendermaßen aussehen und wäre auch für Übertragungsfunktionen höherer Ordnung gültig.

Für die modellierte Trajektorie $Y_1$ unter Berücksichtigung der gemessenen, nicht deformierten Bodenwelle $U_{mess}$ (in der Figur 4 die Erhebung 200) kann beispielhaft folgende Übertragungsfunktion angenommen werden:

$$\frac{Y_1(s)}{U_{mess}(s)} = \frac{K}{T^2 s^2 + 2dTs + 1}$$

Die Parameter 1/T und d beschreiben hierbei die Eigenfrequenz und die Dämpfung der Erntemaschinen- Erntevorsatzkombination. Sie sind abhängig von der Systemmasse, den Feder- und Dämpfereigenschaften der Reifen 14a, 14b und den Feder- und Dämpfereigenschaften des Bodens.

Die real gemessene Trajektorie $Y_2$ (in der Figur 2 die Kurve 214) lässt sich durch dieselbe Struktur beschreiben, wobei angenommen werden kann, dass sich Feder- und Dämpfereigenschaften der Reifen 14a, 14b sowie des Bodens nicht geändert haben.

$$\frac{Y_2(s)}{U_{real}(s)} = \frac{Y_2}{U_{mess}(S) \cdot D} = \frac{K}{T^2 s^2 + 2dTs + 1}$$

D steht hierbei für den Deformationsgrad.

Ein Umstellen der Gleichung gibt Aufschluss über den aktuellen Deformationsgrad der Bodenwelle, welcher bei der nächsten Modellierung der Systemanregung direkt berücksichtigt werden kann, um eine verbesserte Vorsteuerung des Erntevorsatzes 16 zu erzielen.

In den Schritten 304, 306, 404 und 406 wird die jeweilige Vortriebsgeschwindigkeit des Mähdreschers 10 berücksichtigt. Es wäre denkbar, anstelle der oben erwähnten Sensorsignale zur Erfassung der tatsächlichen Geschwindigkeit auf Vorgaben basierende Geschwindigkeiten zu verwenden, die auf der Position des Fahrhebels 44 oder einer selbsttätigen, durchsatzbasierten Geschwindigkeitsregelung beruhen. Diese Vorgaben können besser in die Zukunft vorausschauen als gemessene Geschwindigkeiten.

Derartige Geschwindigkeitsänderungen des Mähdreschers 10 führen außerdem aufgrund der Elastizität der Reifen 14a, 14b und ggf. einer Federung zu Nickbewegungen des Mähdreschers 10 (beim Bremsen nach vorn und beim Beschleunigen nach hinten), die durch die Steuereinrichtung 42 selbsttätig in den Schritten 306 und 406 mit berücksichtigt werden können.

Es bleibt anzumerken, dass eine Ansteuerung eines der Aktoren 48, 52 durch die Steuereinrichtung 42 in den Schritten 306 und 406 aufgrund der Elastizität der Reifen 14a, 14b bzw. der Federung auch zu einer Nickschwingung des Mähdreschers 10 führen kann. Die Steuereinheit 42 kann auch diese Nickschwingung in den Schritten 306 und 406 mit berücksichtigen, um ihren Einfluss zu minimieren. Es wäre auch denkbar, sie in der in DE 10 2014 203 005 A1, deren Offenbarung durch Verweis mit in die vorliegenden Unterlagen aufgenommen wird, beschriebenen Weise durch gegenphasige Ansteuerung des Aktors 48 und/oder 52 auszulöschen oder zu reduzieren.

## Patentansprüche

1. Anordnung zur Positionssteuerung eines an einem landwirtschaftlichen, durch Bodeneingriffsmittel (14) in einer Vorwärtsrichtung (V) über ein Feld bewegbaren Trägerfahrzeug (11) angebrachten Geräts (15), mit:

   einer Steuereinheit (42), die signalübertragend mit einem zur Positionsverstellung des Geräts (15) gegenüber dem Trägerfahrzeug (11) angeordneten Aktor (48, 52) verbunden ist, und einer mit der Steuereinheit (42) verbundenen Bodenprofilbestimmungseinrichtung, die eingerichtet ist, ein Bodenprofil vor dem Trägerfahrzeug (11) zu ermitteln, wobei die Steuereinheit (42) programmiert ist, eine aufgrund des Bodenprofils zu erwartende vertikale Bewegung des Trägerfahrzeugs (11) zu ermitteln und dem Aktor (48, 52) in vorausschauender Weise ein Steuersignal zu übersenden, das derart bemessen ist, dass das Gerät (15) kontinuierlich in einer vorbestimmbaren Position über dem Bodenprofil geführt wird, **dadurch gekennzeichnet, dass** die Steuereinrichtung (42) programmiert ist, beim Ermitteln der aufgrund des Bodenprofils zu erwartenden vertikalen Bewegung des Trägerfahrzeugs (11) Folgendes zu berücksichtigen:

   (a) eine zu erwartende Verformung des Bodenprofils durch die Bodeneingriffsmittel (14) und/oder
   (b) eine zu erwartende, durch das Bodenprofil in als Bodeneingriffsmittel (14) dienenden Reifen (14a, 14b) und/oder einer Federung des Trägerfahrzeugs (11) induzierte vertikale Relativbewegung des Trägerfahrzeugs (11) gegenüber dem Bodenprofil und/oder
   (c) eine zu erwartende, durch eine Geschwindigkeitsänderung des Trägerfahrzeugs (11) in als Bodeneingriffsmittel (14) dienenden Reifen (14a, 14b) und/oder einer Federung des Trägerfahrzeugs (11) induzierte vertikale Relativbewegung des Trägerfahrzeugs (11) gegenüber dem Bodenprofil.

2. Anordnung nach Anspruch 1, wobei die zu erwartende, durch das Bodenprofil induzierte vertikale Relativbewegung des Trägerfahrzeugs (11) gegenüber dem Bodenprofil eine beim Überfahren einer Bodenunebenheit (200) durch Reifenverformung und/oder eine Federung zwischen den Bodeneingriffsmitteln (14) und dem Trägerfahrzeug (11) bedingte Schwingung ist, und wobei die Steuereinrichtung (42) programmiert ist, den Aktor (48, 52) mit einem zur Schwingung gegenphasigen, diese kompensierenden Steuersignal zu beaufschlagen.

3. Anordnung nach Anspruch 1 oder 2, wobei die Steuereinheit (42) programmiert ist, zur Bestimmung des Steuersignals ein Modell des Bodens und/oder des Trägerfahrzeugs (11) zu verwenden, das dessen dynamisches Verhalten beim Befahren von Bodenunebenheiten (200) repräsentiert.

4. Anordnung nach Anspruch 3, wobei in das Modell ein sensorisch erfasster oder berechneter Beladungszustand des Trägerfahrzeugs (11) eingeht.

**5.** Anordnung nach Anspruch 3 oder 4, wobei die Steuereinheit (42) mit einem Istwertsensor (36) zur Erfassung der Höhe des Geräts (15) über dem Boden verbunden und programmiert ist, anhand der Signale des Istwertsensors (36) das Modell selbstlernend an die jeweiligen Gegebenheiten anzupassen.

**6.** Anordnung nach einem der Ansprüche 1 bis 5, wobei die Steuereinheit (42) mit einem Sensor (54) zur Erfassung der vertikalen Bewegung und/oder Beschleunigung des Trägerfahrzeugs (11) verbunden und betreibbar ist, das Signal des Sensors (54) bei der Bestimmung des Steuersignals zu berücksichtigen.

**7.** Anordnung nach einem der vorhergehenden Ansprüche, wobei der Steuereinheit (42) ein Geschwindigkeitssignal und/oder Geschwindigkeitsänderungssignal zuführbar ist und die Steuereinheit (42) programmiert ist, das Geschwindigkeitssignal und/oder Geschwindigkeitsänderungssignal bei der Bestimmung des Steuersignals zu berücksichtigen.

**8.** Anordnung nach einem der vorhergehenden Ansprüche, wobei die Bodenprofilbestimmungseinrichtung einen berührungslos oder mit dem Boden mechanisch wechselwirkenden Bodensensor (36, 70) und/oder eine in einem Speicher (50) abgelegte, topographische Karte umfasst.

**9.** Trägerfahrzeug (11), insbesondere Erntemaschine (10), mit einem Gerät (15), insbesondere Erntevorsatz (16), und einer Anordnung nach einem der vorhergehenden Ansprüche.

**10.** Verfahren zur Positionssteuerung eines an einem landwirtschaftlichen, durch Bodeneingriffsmittel (14) in einer Vorwärtsrichtung über ein Feld bewegbaren Trägerfahrzeug (11) angebrachten Geräts (15), mit:

einer Steuereinheit (42), die signalübertragend mit einem zur Positionsverstellung des Geräts (15) gegenüber dem Trägerfahrzeug (11) angeordneten Aktor (48, 52) verbunden ist, und
einer mit der Steuereinheit (42) verbundenen Bodenprofilbestimmungseinrichtung, die ein Bodenprofil vor dem Trägerfahrzeug (11) ermittelt,
wobei die Steuereinheit (42) eine aufgrund des Bodenprofils zu erwartende vertikale Bewegung des Trägerfahrzeugs (11) ermittelt und dem Aktor (48, 52) in vorausschauender Weise ein Steuersignal übersendet, das derart bemessen ist, dass das Gerät (15) kontinuierlich in einer vorbestimmbaren Position über dem Bodenprofil geführt wird,
**dadurch gekennzeichnet, dass** die Steuereinrichtung (42) beim Ermitteln der aufgrund des Bodenprofils zu erwartenden vertikalen Bewegung des Trägerfahrzeugs (11) Folgendes berücksichtigt:

(a) eine zu erwartende Verformung des Bodenprofils durch die Bodeneingriffsmittel (14) und/oder
(b) eine zu erwartende, durch das Bodenprofil in als Bodeneingriffsmittel (14) dienenden Reifen (14a, 14b) und/oder einer Federung des Trägerfahrzeugs (11) induzierte vertikale Relativbewegung des Trägerfahrzeugs (11) gegenüber dem Bodenprofil und/oder
(c) eine zu erwartende, durch eine Geschwindigkeitsänderung des Trägerfahrzeugs (11) in als Bodeneingriffsmittel (14) dienenden Reifen (14a, 14b) und/oder einer Federung des Trägerfahrzeugs (11) induzierte vertikale Relativbewegung des Trägerfahrzeugs (11) gegenüber dem Bodenprofil.

**Claims**

**1.** Arrangement for controlling the position of a device (15) which is mounted on an agricultural carrier vehicle (11) which can be moved over a field in a forward direction (V) by ground engagement means (14), having:

a control unit (42) which is connected in a signal-transmitting fashion to an actuator (48, 52) which is arranged so as to adjust the position of the device (15) with respect to the carrier vehicle (11), and
a ground-profile-determining apparatus which is connected to the control unit (42), to determine a ground profile ahead of the carrier vehicle (11), wherein the control unit (42) is programmed to determine a vertical movement of the carrier vehicle (11) which is to be expected on the basis of the ground profile, and to transfer a control signal predictively to the actuator (48, 52), which control signal is dimensioned in such a way that the device (15) is guided continuously in a predeterminable position over the ground profile, **characterized in that** the control apparatus (42) is programmed to take into account the following during the determination of the vertical movement of the carrier vehicle (11), which is to be expected on the basis of the ground profile:

a) an expected deformation of the ground profile by the ground engagement means (14) and/or
b) an expected vertical relative movement of the carrier vehicle (11) with respect to the ground profile, which movement is induced by the ground profile in tyres (14a, 14b) serving as ground engagement means (14) and/or in a suspension system of the carrier vehicle (11), and/or

c) an expected vertical relative movement of the carrier vehicle (11), which movement is induced by change of speed of the carrier vehicle (11) in tyres (14a, 14b) which serve as ground engagement means (14) and/or in a suspension system of the carrier vehicle (11).

2. Arrangement according to Claim 1, wherein the expected vertical relative movement of the carrier vehicle (11) with respect to the ground profile, which movement is induced by the ground profile, is a vibration which is brought about when unevenness (200) in the ground is travelled over as a result of tyre deformation and/or a suspension system between the ground engagement means (14) and the carrier vehicle (11), and wherein the control device (42) is programmed to apply a control signal to the actuator (48, 52) which is in antiphase with respect to the vibration and compensates said vibration.

3. Arrangement according to Claim 1 or 2, wherein the control unit (42) is programmed to use a model of the ground and/or of the carrier vehicle (11) to determine the control signal, which model represents the dynamic behaviour of said carrier vehicle (11) as it travels over uneven parts (200) of the ground.

4. Arrangement according to Claim 3, wherein a load state of the carrier vehicle (11) which is acquired by sensor or calculated is input into the model.

5. Arrangement according to Claim 3 or 4, wherein the control unit (42) is connected to an actual value sensor (36) for sensing the height of the device (15) above the ground, and is programmed to adapt the model in a self-learning fashion to the respective conditions on the basis of the signals of the actual value sensor (36).

6. Arrangement according to one of Claims 1 to 5, wherein the control unit (42) is connected to a sensor (54) for sensing the vertical movement and/or acceleration of the carrier vehicle (11) and can be operated to take into account the signal of the sensor (54) during the determination of the control signal.

7. Arrangement according to one of the preceding claims, wherein a speed signal and/or change of speed signal can be fed to the control unit (42), and the control unit (42) is programmed to take into account the speed signal and/or change of speed signal during the determination of the control signal.

8. Arrangement according to one of the preceding claims, wherein the ground-profile-determining apparatus comprises a ground sensor (36, 70) which interacts in a contactless fashion or in a mechanical fashion with the ground and/or a topographical map which is stored in a memory (50).

9. Carrier vehicle (11), in particular harvesting machine (10), having a device (15), in particular harvesting attachment (16), and an arrangement according to one of the preceding claims.

10. Method for controlling the position of a device (15) which is attached to an agricultural carrier vehicle (11) which can be moved over a field in a forward direction by ground engagement means (14), having:

a control unit (42) which is connected in a signal-transmitting fashion to an actuator (48, 52) which is arranged so as to adjust the position of the device (15) with respect to the carrier vehicle (11), and
a ground-profile-determining apparatus which is connected to the control unit (42) and which determines a ground profile in front of the carrier vehicle (11),
wherein the control unit (42) determines a vertical movement of the carrier vehicle (11) which is to be expected on the basis of the ground profile, and transfers a control signal predictively to the actuator (48, 52), which control signal is dimensioned in such a way that the device (15) is continuously moved into a predeterminable position above the ground profile,
**characterized in that** the control apparatus (42) takes into account the following during the determination of the vertical movement of the carrier vehicle (11) which is to be expected on the basis of the ground profile;

a) an expected deformation of the ground profile by the ground engagement means (14) and/or
b) an expected vertical relative movement of the carrier vehicle (11) with respect to the ground profile, which movement is induced by the ground profile in tyres (14a, 14b) which serve as ground engagement means (14) and/or in a suspension system of the carrier vehicle (11), and/or
c) an expected vertical relative movement of the carrier vehicle (11) with respect to the ground profile, which movement is induced by a change of speed of the carrier vehicle (11) in tyres (14a, 14b) which serve as ground engagement means (14) and/or in a suspension system of the carrier vehicle (11).

## Revendications

1. Arrangement de commande de position d'un appareil (15) monté sur un véhicule porteur (11) agricole, pouvant être déplacé sur un champ dans un sens de marche avant (V) par des moyens de contact avec le sol (14), comprenant :

une unité de commande (42) qui est reliée avec transmission de signal à un actionneur (48, 52) disposé pour le réglage de la position de l'appareil (15) par rapport au véhicule porteur (11), et
un dispositif de détermination de profil du sol relié à l'unité de commande (42), lequel est conçu pour déterminer un profil du sol devant le véhicule porteur (11),
l'unité de commande (42) étant programmée pour déterminer un mouvement vertical du véhicule porteur (11) à attendre du fait du profil du sol et envoyer préventivement à l'actionneur (48, 52) un signal de commande qui est calculé de telle sorte que l'appareil (15) est continuellement guidé dans une position pouvant être prédéterminée au-dessus du profil du sol, **caractérisé en ce que** le dispositif de commande (42) est programmé pour tenir compte des aspects suivants lors de la détermination du mouvement vertical du véhicule porteur (11) à attendre du fait du profil du sol :

(a) une déformation à attendre du profil du sol par les moyens de contact avec le sol (14) et/ou
(b) un mouvement vertical relatif à attendre du véhicule porteur (11) par rapport au profil du sol, induit par le profil du sol dans les pneus (14a, 14b) qui servent de moyens de contact avec le sol (14) et/ou une suspension du véhicule porteur (11) et/ou
(c) un mouvement vertical relatif à attendre du véhicule porteur (11) par rapport au profil du sol, induit par un changement de vitesse du véhicule porteur (11) dans les pneus (14a, 14b) qui servent de moyens de contact avec le sol (14) et/ou une suspension du véhicule porteur (11).

2. Arrangement selon la revendication 1, le mouvement vertical relatif à attendre du véhicule porteur (11) par rapport au profil du sol, induit par le profil du sol, étant une oscillation provoquée lors du franchissement d'une irrégularité du sol (200) par une déformation des pneus et/ou une suspension entre les moyens de contact avec le sol (14) et le véhicule porteur (11), et le dispositif de commande (42) étant programmé pour solliciter l'actionneur (48, 52) avec un signal de commande en opposition de phase avec l'oscillation, qui compense celle-ci.

3. Arrangement selon la revendication 1 ou 2, l'unité de commande (42) étant programmée pour, en vue de déterminer le signal de commande, utiliser un modèle du sol et/ou du véhicule porteur (11) qui représente son comportement dynamique lors du franchissement d'irrégularités du sol (200).

4. Arrangement selon la revendication 3, un état de chargement acquis par détection ou calculé du véhicule porteur (11) intervenant dans le modèle.

5. Arrangement selon la revendication 3 ou 4, l'unité de commande (42) étant reliée à un capteur de valeur réelle (36) destiné à acquérir la hauteur de l'appareil (15) au-dessus du sol et programmée pour adapter le modèle par autoapprentissage aux conditions en présence respectives au moyen des signaux du capteur de valeur réelle (36).

6. Arrangement selon l'une des revendications 1 à 5, l'unité de commande (42) étant reliée à un capteur (54) destiné à acquérir le mouvement vertical et/ou l'accélération du véhicule porteur (11) et pouvant être utilisée pour tenir compte du signal du capteur (54) lors de la détermination du signal de commande.

7. Arrangement selon l'une des revendications précédentes, un signal de vitesse et/ou un signal de changement de vitesse pouvant être acheminé à l'unité de commande (42) et l'unité de commande (42) étant programmée pour tenir compte du signal de vitesse et/ou du signal de changement de vitesse lors de la détermination du signal de commande.

8. Arrangement selon l'une des revendications précédentes, le dispositif de détermination de profil du sol comprenant un capteur de sol (36, 70) sans contact ou à interaction mécanique avec le sol et/ou une carte topographique enregistrée dans une mémoire (50).

9. Véhicule porteur (11), notamment récolteuse (10), comprenant un appareil (15), notamment une tête de récolte (16), et un arrangement selon l'une des revendications précédentes.

10. Procédé de commande de position d'un appareil (15) monté sur un véhicule porteur (11) agricole, pouvant être déplacé sur un champ dans un sens de marche avant par des moyens de contact avec le sol (14), comprenant :

**12**

une unité de commande (42) qui est reliée avec transmission de signal à un actionneur (48, 52) disposé pour le réglage de la position de l'appareil (15) par rapport au véhicule porteur (11), et

un dispositif de détermination de profil du sol relié à l'unité de commande (42), lequel détermine un profil du sol devant le véhicule porteur (11),

l'unité de commande (42) déterminant un mouvement vertical du véhicule porteur (11) à attendre du fait du profil du sol et envoyant préventivement à l'actionneur (48, 52) un signal de commande qui est calculé de telle sorte que l'appareil (15) est continuellement guidé dans une position pouvant être prédéterminée au-dessus du profil du sol,

**caractérisé en ce que** le dispositif de commande (42) tient compte des aspects suivants lors de la détermination du mouvement vertical du véhicule porteur (11) à attendre du fait du profil du sol :

(a) une déformation à attendre du profil du sol par les moyens de contact avec le sol (14) et/ou

(b) un mouvement vertical relatif à attendre du véhicule porteur (11) par rapport au profil du sol, induit par le profil du sol dans les pneus (14a, 14b) qui servent de moyens de contact avec le sol (14) et/ou une suspension du véhicule porteur (11) et/ou

(c) un mouvement vertical relatif à attendre du véhicule porteur (11) par rapport au profil du sol, induit par un changement de vitesse du véhicule porteur (11) dans les pneus (14a, 14b) qui servent de moyens de contact avec le sol (14) et/ou une suspension du véhicule porteur (11).

FIG. 1

EP 2 939 518 B1

EP 2 939 518 B1

FIG. 2A

**FIG. 2**

FIG. 3

| 300 |
| :---: |
| Start |

↓

| 302 |
| :---: |
| Bodenprofil evaluieren |

↓

| 304 |
| :---: |
| Einfluss der Räder auf Bodenprofil bestimmen |

↓

| 306 |
| :---: |
| Signal für Aktor bestimmen |

↓

| 308 |
| :---: |
| Vergleich Soll/Ist |

| 310 |
| :---: |
| ggf. Parameter anpassen |

FIG. 4

FIG. 4A

Start
402 Bodenprofil evaluieren
404 Bewegung des Mähdreschers berechnen
406 Signal für Aktor bestimmen
408 Vergleich Soll/Ist
410 ggf. Parameter anpassen

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0331893 A2
- EP 1269823 A1
- EP 1356729 A1
- DE 102010040872 A1
- WO 2008088916 A2
- DE 19900212 A1
- WO 2006018215 A1
- DE 20007795 U1
- EP 2583545 A1
- EP 2910097 A1
- DE 102014203005 A1